# EUROPEAN PATENT APPLICATION

(11) **EP 2 189 274 A1**
(43) Date of publication of application: **26.05.2010**
(21) Application number: 08827283.6
(22) Date of filing: 08.08.2008
(51) Int. Cl.: B29C 70/16, B60K 17/22, B29K 101/10, B29K 105/08, B29L 23/00

(54) **PROCESS FOR PRODUCING TUBE MEMBER MADE OF FIBER-REINFORCED RESIN**

(30) Priority: 10.08.2007 JP 2007209969
(71) Applicant: Toyota Jidosha Kabushiki Kaisha, Toyota-shi, Aichi 471-8571 (JP); Kabushiki Kaisha Toyota Jidoshokki, Kariya-shi, Aichi 448-8671 (JP)
(72) Inventor: KOZAKI, Takahiro, Toyota-shi Aichi 471-8571 (JP); NONOGAKI, Yasunori, Kariya-shi Aichi 448-8671 (JP); TAKASHIMA, Tasuku, Kariya-shi Aichi 448-8671 (JP)
(74) Representative: Albutt, Anthony John
(86) International application number: PCT/JP2008/064290
(87) International publication number: WO 2009/022643

(57) **Abstract**

There is provided a process for producing a tube member made of fiber-reinforced resin in which it is unnecessary to fold back an end portion of a fiber layer impregnated with uncured resin, and which is capable of joining a tube member, which comprises a resin fiber, and a flanged tube material, which is to be directly rigidly coupled with an engine box or the like, while maintaining the fiber orientation in the initial orientation posture and through an extremely simple process as well. In the process, there is provided a base member 10 comprising a mandrel 1, and an end portion attachment member 2 that is attached to one end thereof and that has a protrusion and a wide diameter portion of a wider diameter as compared to the mandrel. A fiber impregnated with uncured resin is hoop wound around the outer circumference of the mandrel 1 to form a first wound layer 3. A fiber is further helically wound around the outer circumference thereof to form a second wound layer 4. An end portion of the second wound layer 4 is severed, and the end portion and the end portion attachment member 2 are severed off from the mandrel 1 to form an insertion space 7. A flanged tube material 6 is inserted into the insertion space 7. A fiber is hoop wound around the outer circumference of the second wound layer 4 to form a third wound layer 5, and a heat treatment is performed.

## Description

### Technical Field

The present invention relates to a process for producing a tube member made of fiber-reinforced resin from a mandrel and a fiber impregnated with uncured resin, the tube member being for use as a torque tube for vehicles in particular.

### Background Art

In vehicles of a structural form comprising a front engine, and a transmission and deferential (a transaxle) mounted at the rear side of the vehicle, a cylindrical torque tube, whose interior is penetrated by a driveshaft (input shaft) and which also has a built-in bearing supporting it, is used as a structural member that transmits a drive force from the front engine to the transmission.

This torque tube has one end thereof rigidly coupled with an engine box by bolts and the like, and has the other end thereof rigidly coupled with the transmission also by bolts and the like. Because of the structure in which this elongate member has both ends thereof rigidly coupled with the drivetrain, this torque tube is subjected to bending due in particular to the torque reaction and the like from the wheels under various circumstances such as when the vehicle starts moving from rest, when turning a curve, and the like. Thus, instead of being required to have torsional stiffness as in the propeller shaft disclosed in Patent Document 1, for example, bending stiffness is required of this torque tube.

Conventional torque tubes were metallic tube bodies, but given the demand for lighter vehicles in recent years, they are starting to be formed from light weight and high stiffness fiber-reinforced resin instead of metal materials. The production process in such cases is one in which, for example, production is by the so-called filament winding molding method. This molding method is one in which molding is performed by impregnating numerous strands of resin fiber with a matrix resin while winding it at a predetermined angle around a rotating mold mandrel by applying a tension up to a predetermined thickness, and removing the mandrel after the resin is thermally cured. This resin fiber layer is sometimes molded with a multi-layer structure comprising a layer that is wound in the circumferential direction of the mandrel, and a layer that is helically wound at a predetermined inclination angle with respect to the axial direction (longitudinal direction) thereof. It is noted that the propeller shaft disclosed in the above-mentioned Patent Document 1 is also a tubular member made of fiber-reinforced plastic, and is of a configuration in which torque transmitting couplings are joined to both end portions thereof.

Incidentally, in the torque tube comprising the above-mentioned metallic mandrel and the resin fiber reinforced layer formed on the outer circumference thereof, flanged metallic tubular members are assembled onto both end portions thereof. This is to respectively fix both ends of the torque tube to the engine box and the transmission with bolts as mentioned above.

The specific process for assembling these flanged tubular members is one in which: an end portion of a fiber layer, whose resin is uncured, that is wound around the surface of the mold mandrel is folded back; subsequently, a tubular member is inserted and positioned between the mandrel and the fiber layer; the folded back fiber layer is unfolded to install the tubular member between the mandrel and the fiber layer; and the resin is thermally cured.

With the above-mentioned assembly process, the orientation of the fibers is disrupted when the fiber layer is folded back, and there may arise a significant problem where the initial bending strength can no longer be exhibited with respect to the bending moment predominant at that end portion. In addition, there also was a problem in that the uncured resin would adhere to the mold mandrel, and cure on the mandrel with the thermal curing. It is noted that, with respect to the process for connecting the torque transmitting couplings and the tubular member made of fiber-reinforced plastic with regard to the propeller shaft disclosed in the above-mentioned Patent Document 1, there is no disclosure at all of such problems, nor any teachings regarding solutions thereto.
Patent Document 1: Japanese Patent Publication (Kokai) No. 6-123308 A (1994)

### Disclosure of the Invention

### Problem to be Solved by the Invention

The present invention is made in view of the problems mentioned above, where its object is to provide a process for producing a tube member made of fiber-reinforced resin in which it is unnecessary to fold back an end portion of a fiber layer impregnated with uncured resin, and which is therefore capable of joining a tube member, which comprises a resin fiber, and flanged tube materials, which are to be directly rigidly coupled with an engine box and the like, while maintaining the fiber orientation in the initial orientation posture and through an extremely simple process as well.

### Means for Solving the Problem

In order to achieve the object mentioned above, a process for producing a tube member made of fiber-reinforced resin according to the present invention is **characterized in that** it comprises: a first step of providing a base member comprising an elongate mandrel with a circular cross-section, and an end portion attachment member that is attached to one end of the mandrel and that has a protrusion and a wide diameter portion of a wider diameter as compared to the mandrel; a second step of forming a first wound layer by hoop winding a fiber impregnated with uncured resin around the outer circumference of the mandrel in the circumferential direction thereof or by helically winding it while turning back the fiber at the protrusion, and subsequently forming an insertion space between the first wound layer and the mandrel by severing an end portion of the first wound layer to sever off the end portion and the end portion attachment member from the mandrel; a third step of inserting a flanged tube material from one end of the mandrel, and forming a posture where a portion of the tube material is inserted into the insertion space; a fourth step of forming a second wound layer by hoop winding or helically winding a fiber impregnated with uncured resin around the outer circumference of the first wound layer formed on the outer circumferences of the mandrel and the tube material, thereby producing an intermediate member comprising the tube material and the first and second wound layers; and a fifth step of producing a tube member made of fiber-reinforced resin in which the first and second wound layers are thermally cured by treating the intermediate member with heat, and subsequently removing the mandrel.

A process for producing a tube member made of fiber-reinforced resin of the present invention relates to a production process in which the above-mentioned torque tube is formed from fiber-reinforced resin. In particular, it relates to a production process which, in joining a metallic tube material having a flange (an annular flange) to an end portion of a tube member made of fiber-reinforced resin, is capable of joining the two without disrupting the initial fiber orientation and through a simple process as well.

First, the mold mandrel is provided, and the end portion attachment member having the protrusion and the wide diameter portion of a wider diameter as compared to the mandrel is attached to the end portion thereof to form the base member (first step). Here, this end portion attachment member is so attached as to be freely attachable/detachable to/from the mandrel, and is so configured as to be detachable in the process of producing the tube member made of fiber-reinforced resin. By virtue of the fact that this end portion attachment member has the wide diameter portion, as will be described later, it is possible to form between the mandrel surface and the first wound layer an annular space, which tapers towards the tip end and which is of a thickness comparable to the metallic tube material in the back, when this end portion attachment member is removed from the mandrel after the first wound layer is formed. By means of this formed space, it becomes possible to insert and install the flanged metallic tube material with ease by widening the wound layer without disrupting the orientation thereof.

The first wound layer is formed by hoop winding or helically winding around the outer circumference of this base member a fiber impregnated with uncured resin which is obtained by running a fiber, such as a carbon fiber or the like, through a matrix resin bath. Here, the term hoop winding refers to an act of winding in the circumferential direction of the mandrel or the like. In addition, the term helical winding refers to an act of winding helically at a predetermined angle with respect to the axial direction of the mandrel, and in the present case, helical winding can be implemented a predetermined number of times with, for example, the protrusions formed at the tip ends of the end portion attachment members on both ends of the mandrel as turn back points.

After the first wound layer is formed, both of these end portions are severed, and along with these severed pieces, the end portion attachment members are removed from the mandrel, thereby forming spaces between the mandrel surface and the first wound layer (second step).

Next, the flanged metallic tube materials are inserted into the formed insertion spaces (third step). Bolt holes are bored in this flange portion, and are eventually aligned with bolt holes and the like of the engine box so that the two may be bolted.

After the metallic tube materials are inserted into the insertion spaces on both ends of the mandrel, the second wound layer is further formed on the outer circumference of the first wound layer. This second wound layer is also formed by hoop winding or helically winding a fiber impregnated with uncured resin (fourth step).

At the point of this fourth step, there is produced the intermediate member comprising the metallic tube materials positioned on the outer circumference of the mandrel, and the elongate first and second wound layers (the matrix resin uncured) formed so as to surround these metallic tube materials.

Next, this intermediate member is heat treated to thermally cure the matrix resin of the first and second wound layers, and by finally removing (pulling out) the mandrel inside, the tube member made of fiber-reinforced resin is produced (fifth step).

According to the process for producing a tube member made of fiber-reinforced resin of the present invention mentioned above, it is possible to attach a main body portion, which comprises fiber resin and forms the tube member made of fiber-reinforced resin, and flanged metallic tube materials on both end portions thereof, without disrupting the orientation of the resin fiber and with ease as well.

In addition, another embodiment of a process for producing a tube member made of fiber-reinforced resin according to the present invention is **characterized in that** it comprises: a first step of providing a base member comprising an elongate mandrel with a circular cross-section, and an end portion attachment member that is attached to one end of the mandrel and that has a protrusion and a wide diameter portion of a wider diameter as compared to the mandrel; a second step of forming a first wound layer by hoop winding a fiber impregnated with uncured resin around the outer circumference of the mandrel in the circumferential direction thereof, subsequently forming a second wound layer by helically winding a fiber impregnated with uncured resin around the outer circumference of the first wound layer and the outer circumference of the end portion attachment member while turning back the fiber at the protrusion, and subsequently forming an insertion space between the second wound layer and the mandrel by severing an end portion of the second wound layer to sever off the end portion and the end portion attachment member from the mandrel; a third step of inserting a flanged tube material from one end of the mandrel, and forming a posture where a portion of the tube material is inserted into the insertion space; a fourth step of producing, by forming a third wound layer by hoop winding or helically winding a fiber impregnated with uncured resin around the outer circumference of the second wound layer formed on the outer circumferences of the mandrel and the tube material, an intermediate member comprising the tube material, and the first, second, and third wound layers; and a fifth step of producing a tube member made of fiber-reinforced resin, in which the first, second, and third wound layers are thermally cured by treating the intermediate member with heat, and subsequently removing the mandrel.

The present embodiment is one in which are formed three layers of resin layers with varying winding directions. Here, the thickness of the first wound layer is comparable to that of the end portion attachment member, and this is wound only around the outer circumference of the mandrel. Next, the second wound layer is helically wound around the outer circumferences of the first wound layer and the end portion attachment member this time. Next, both end portions are severed, and the end portion attachment member is removed from the mandrel to form the insertion space between the mandrel and the second wound layer. The flanged tube material is inserted into this insertion space, and the third wound layer is subsequently formed by, for example, hoop winding the fiber around the outer circumference of the second wound layer.

By virtue of the first wound layer, it is unlikely that a gap would form between this end portion and the flanged tube material.

By virtue of the third wound layer, the second wound layer is sufficiently constricted, it is also possible to discharge excess resin from this second wound layer, and the occurrence of voids in the interior of the resin layer can thus be effectively inhibited. Further, by virtue of the third wound layer, it is possible to enhance the connection strength between the elongate main body portion and the flanged tube materials on both ends thereof that are connected by the second wound layer, and it is thus possible to produce a member that is capable of resisting a bending moment that is predominant at the end portions thereof in particular. It is noted that, as another embodiment of the formation of the third wound layer, there is also a process in which the third wound layer is first formed only on the outer circumference of the second wound layer on the mandrel, and, after the flanged tube material is inserted and installed, the third wound layer is formed on the outer circumference of the second wound layer on the outer circumference of this tube material (in other words, a process in which the third wound layer is divided into two stages).

In addition, there may be formed on the outer circumference of the tube material a recessed groove that extends in the circumferential direction or in a direction that is inclined at a predetermined angle to the circumferential direction.

By having, for example, the second wound layer enter into this recessed groove, it is possible to improve the tensile capacity for when a tension (or a bending tension) is acting on the member.

In addition, in another embodiment of a production process according to the present invention, there is also an embodiment further comprising, subsequent to the fifth step, a sixth step of inserting and installing a bearing and a shaft in the interior of the mandrel, subsequently press fitting from one end of the tube material a tubular reinforcement member having an overall length in which a predetermined length is added to the length of the tube material, and producing the tube member made of fiber-reinforced resin with one end of the reinforcement member and one end of the tube material in the same plane.

As has been described, a bending moment due to an external force occurs particularly at the end portions of this torque tube, and a bending capacity capable of resisting such bending is demanded.

As such, the present embodiment seeks to further enhance the bending capacity of the member by providing bending reinforcement members at both ends of the member in particular. In order to enhance the bending stiffness of the end portions of the member, a reinforcement member having a length that equals the length of the tube material plus α (where this α is a length that laps with the first wound layer) should be used. Thus, it would be possible to effectively reinforce the connection interface between the tube material and the first wound layer.

This reinforcement member takes on a tubular form such that a shaft may penetrate its interior. In order to realize a strong connection with the tube member made of fiber-reinforced resin, the inner diameter of the tube member and the outer diameter of the reinforcement member are adjusted, and this reinforcement member is press fitted and joined within the tube member.

In addition, even if, due to the difference in linear expansion between the flanged metallic tube material and the resin fiber layer, looseness were to occur between the two at the time of integral molding by heat treatment and the joint strength were to drop, it would still also be possible to effectively reinforce the joint portion at the end portions of the member by virtue of the above-mentioned reinforcement members.

In addition, another embodiment of a process for producing a tube member made of fiber-reinforced resin according to the present invention is **characterized in that,** if the first wound layer comprises a wound layer that is helically wound, the winding angle thereof is a small angle of 10 degrees to 20 degrees with respect to the axial direction of the mandrel.

With respect to the wound layer in which the fiber is helically wound, it is preferable that the fiber be oriented in the axial direction as much as possible so as to enhance the bending strength of the member, and, at the same time, it is necessary that an angle with which helical winding can be realized be secured.

The helical winding angle of the fiber is adjusted to a small angle of 10 degrees to 20 degrees with respect to the axial direction of the mandrel in order to realize both this bending strength and producability.

Further, another embodiment of a process for producing a tube member made of fiber-reinforced resin according to the present invention is **characterized in that,** if the third wound layer comprises a wound layer that is helically wound, the winding angle thereof is a large angle of 45 degrees or above with respect to the axial direction of the mandrel.

With respect to a tube member made of fiber-reinforced resin comprising the third wound layer, if the fiber of this third wound layer is helically wound, it is preferable that it be helically wound at a large angle of 45 degrees or above (but 90 degrees or below) with respect to the axial direction with a view to enhancing the constricting effect on the second wound layer and, further, the bending strength.

### Effect of the Invention

As can be understood from the description above, according to a process for producing a tube member made of fiber-reinforced resin of the present invention, there is no need to fold back an end portion of a fiber layer impregnated with uncured resin. Thus, while maintaining the fiber orientation in the initial orientation posture, and, further, through an extremely simple process, it is possible to join a tube member, which comprises a resin fiber, and a flanged tube material, which is to be directly rigidly coupled with an engine box or the like.

### Brief Description of the Drawings

[Fig. 1] is a front view of a base member comprising a mandrel and end portion attachment members.
[Fig. 2] is a sectional view illustrating the end portion structure of a torque tube..
[Fig. 3] is a flow chart illustrating a production process of the present invention in order from (a) to (f).
[Fig. 4] is a perspective view illustrating Fig. 3a.
[Fig. 5] is a perspective view illustrating Fig. 3b.
[Fig. 6] is a perspective view illustrating Fig. 3b.
[Fig. 7] is a diagram illustrating a state of inserting a reinforcement member into an end portion of a member.
[Fig. 8] is a sectional view illustrating the end portion structure of a reinforced torque tube.

### Description of Symbols

1··· mandrel, 2··· end portion attachment member, 21··· wide diameter portion, 22··· tapered portion, 23··· protrusion, 3··· first wound layer, 31··· carbon fiber, 4··· second wound layer, 41··· carbon fiber, 5··· third wound layer, 51··· carbon fiber, 6··· metal tube material, 61··· general cylinder portion, 62··· flange portion, 61a··· recessed groove, 7··· insertion space, 8··· reinforcement member, 10··· base member, 100··· torque tube

### Best Mode for Carrying Out the Invention

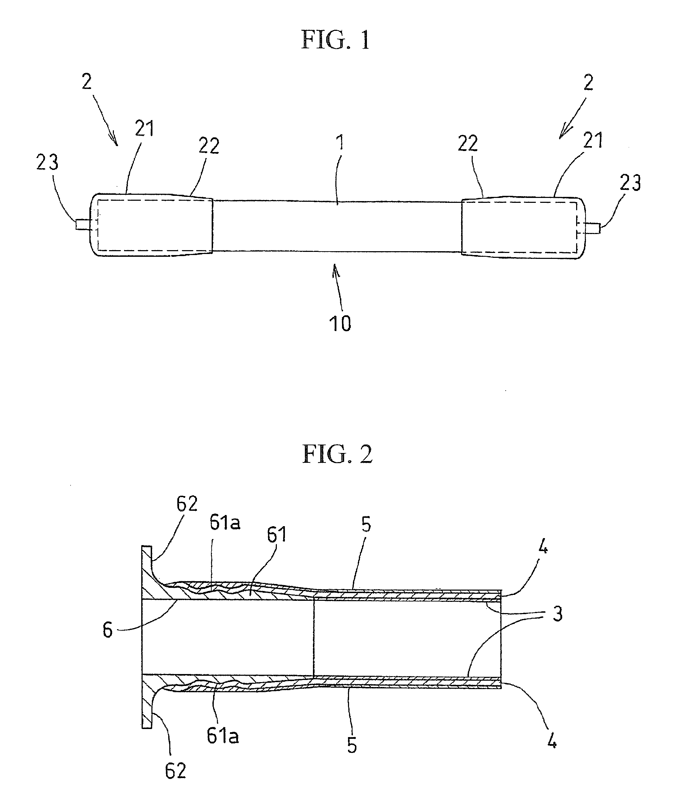

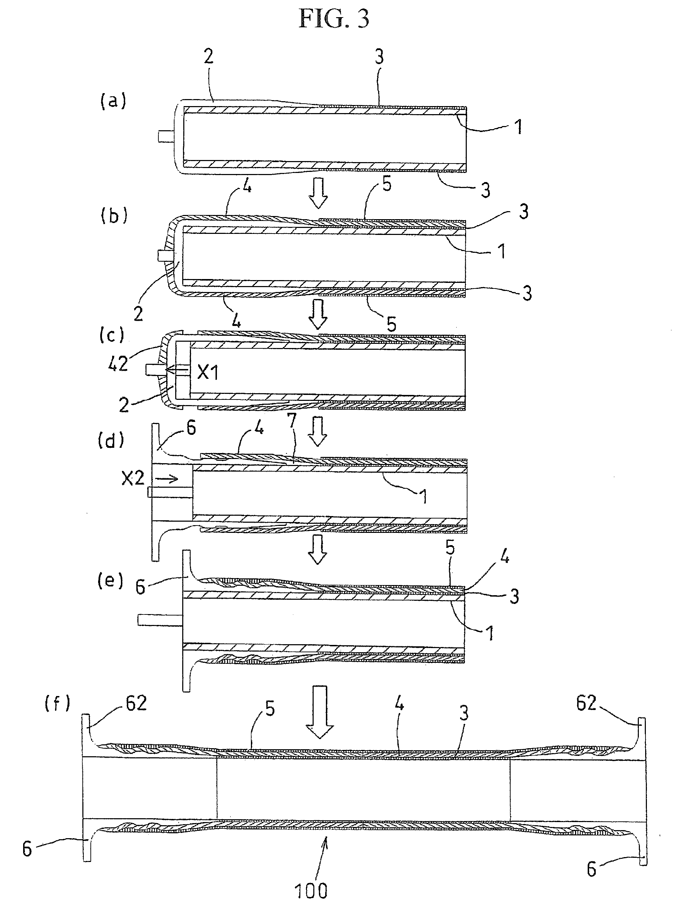

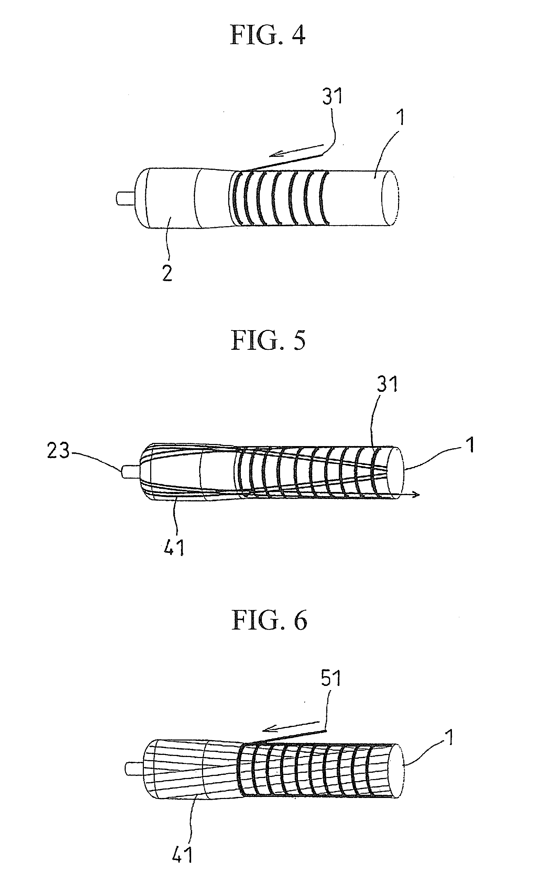

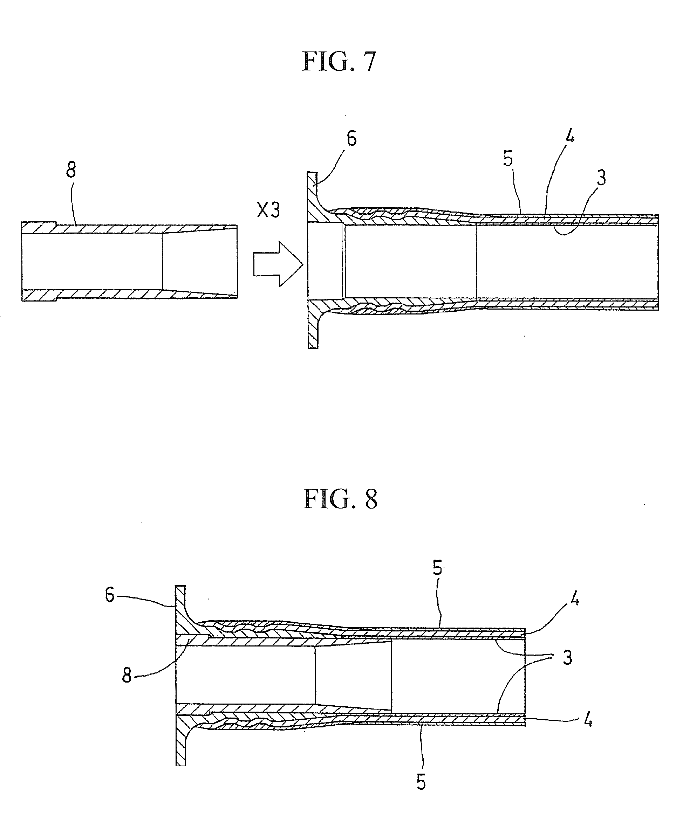

Embodiments of the present invention are described below with reference to the drawings. Fig. 1 is a front view of a base member comprising a mandrel and end portion attachment members. Fig. 2 is a sectional view illustrating the end portion structure of a torque tube. Fig. 3a through Fig. 3f, in order, are flow charts illustrating a production process of the present invention. Fig. 4 is a perspective view illustrating Fig. 3a, and Figs. 5 and 6, in order, are perspective views illustrating Fig. 3b. Fig. 7 is a diagram illustrating a state of inserting a reinforcement member into an end portion of a member. Fig. 8 is a sectional view illustrating the end portion structure of a reinforced torque tube. It is noted that the bearing and shaft within the torque tube are omitted in the drawings.

A mold for producing a torque tube, which is a tube member made of carbon fiber-reinforced resin, is shown in Fig. 1. This mold base member 10 comprises an elongate and cylindrical metallic mandrel 1, and end portion attachment members 2, 2 that are fitted on both end portions thereof in a freely attachable/detachable manner.

This end portion attachment member 2 comprises a tapered portion 22 that widens in diameter from the tip end thereof, and a wide diameter portion 21 of a wider diameter as compared to the mandrel 1. A protrusion 23 is provided at an end portion of the wide diameter portion 21. This protrusion 23 serves as a turn back point when helically winding a carbon fiber over the mandrel.

The ultimately produced torque tube comprises a multi-layer structure of a wound layer formed by hoop winding around the outer circumferential surface of this base member 10a carbon fiber impregnated with an uncured matrix resin, and a wound layer formed by helically winding a separate carbon fiber similarly impregnated with uncured resin. The torque tube is produced by thermally curing this matrix resin.

Fig. 2 is a sectional view illustrating the end portion structure of the torque tube, and shows a state where the internal mold mandrel has been removed. This embodiment comprises: a wound layer 3 (first wound layer) in which a carbon fiber is hoop wound around the outer circumference of the mandrel 1; and a wound layer 4 (second wound layer) that is formed by continuously helically winding a carbon fiber at a predetermined angle around the outer circumference of the wound layer 3 and around both outer circumferential surfaces of flanged metal tube materials 6 on the end portions; and a wound layer 5 (third wound layer) in which a carbon fiber is further hoop wound around the outer circumferential surface of this wound layer 4.

Here, the metal tube material 6 is one in which a general cylinder portion 61 on which the wound layers 4 and 5 are to be formed, and a flange portion 62 that protrudes in the radial direction at an end portion thereof are integrally formed. On the general cylinder portion 61 are formed, in the hoop direction, numerous recessed grooves 61a for enhancing adhesion (tensile strength) with the wound layer 4. In addition, bolt holes that are not shown in the drawings are bored in the flange portion 62, enabling bolting with the engine box or transmission.

In a torque tube of the present invention, a bearing and a shaft, not shown in the drawings, are inserted and installed in the interior of the first wound layer 3.

Fig. 3 is a flow chart illustrating a process for producing a torque tube of the present invention. Figs. 4 to 6 are diagrams illustrating winding conditions of the carbon fiber in Figs. 3a and b.

First, as in Fig. 3a, the end portion attachment members 2, 2 are attached on both end portions of the mandrel 1 as shown in Fig. 1. The first wound layer 3 is formed by hoop winding a carbon fiber 31 impregnated with an uncured matrix resin only on the outer circumferential surface of the mandrel 1 as illustrated in Fig. 4. Here, the thickness of this wound layer 3 is set to a thickness that is comparable to the thickness of the metal tube material 6 that is to be subsequently attached. Thus, it is possible to eliminate occurrences of unevenness in the second wound layer that is to be wound continuously around the outer circumference of the mandrel and the outer circumference of the metal tube material.

Next, as in Fig. 3b and Fig.5, the second wound layer 4 is formed by helically winding a separate carbon fiber 41 around the outer circumferences of the first wound layer 3 on the mandrel 1 and the end portion attachment member 2 with the protrusion 23 as a turn back point. Here, the winding angle for this helical winding is set to a small angle of 10 degrees to 20 degrees with respect to the axial direction of the mandrel 1.

Further, as in Fig. 6, the third wound layer 5 is formed by hoop winding around the outer circumference of the second wound layer 4 a carbon fiber 51 for constricting this wound layer 4. It is noted that in the embodiment shown in the drawings, the third wound layer is not formed on the second wound layer 4 around the outer circumference of the end portion attachment member 2 at this point. As will be described later, after the metal tube material 6 is attached to the mandrel 1, the third wound layer 5 is formed further on the outer circumference of the second wound layer 4 on the outer circumference thereof.

Next, as in Fig. 3c, an end portion piece 42 of the second wound layer 4 is severed, and this and the end portion attachment member 2 are removed from the mandrel 1 (X1 direction).

Through this removal step, as in Fig. 3d, an insertion space 7 is formed between the second wound layer 4 and the outer circumferential surface of the mandrel 1.

By inserting the metal tube material 6 into this insertion space (X2 direction), placing the end portion of the second wound layer 4 in close contact with the metal tube material 6 as in Fig. 3e, and forming the third wound layer 5 around the outer circumferential surface thereof, the framework of the torque tube is formed.

By treating the intermediate member produced through the steps above and the mandrel 1 with heat to thermally cure the matrix resin of the respective wound layers 3, 4, and 5, and removing the internal mandrel 1 after a predetermined strength is developed, there is produced a torque tube 100, such as that shown in Fig. 3f, in which the metal tube materials 6, 6, which comprise the flange portions 62, 62 having bolt holes, on both end portions and a carbon fiber-reinforced resin general portion are strongly joined. It is noted that a bearing and shaft not shown in the drawings are inserted and installed in the interior of the tube of this torque tube 100.

According to a process for producing a torque tube of the present invention mentioned above, it is possible to readily form a space for inserting the metal tube material 6 between the mandrel 1 and the second wound layer, and by inserting and installing the metal tube material 6 therein, and merely pressing the second wound layer 4 against the metal tube material 6, the two can be integrated into one piece. Thus, it is possible to integrate the metal tube material 6 with the carbon fiber wound layer in a simple manner, without disrupting the orientation of the carbon fiber forming the second wound layer.

Figs. 7 and 8 are diagrams illustrating a reinforcement process for further enhancing the bending strength of the end portions of this torque tube.

First, the inner diameter on the end portion side of the metal tube material 6 is shaped slightly large so as to secure ease of insertion for a reinforcement member. A metallic reinforcement member 8 is press fitted therein (X3 direction). Thus, as in Fig. 8, there is produced a torque tube whose bending stiffness at the end portions is enhanced. This reinforcement member 8 is a member having a length that measures the length of the metal tube material 6 plus α, and their inner diameters and outer diameters are appropriately adjusted so that the two may be joined by press fitting.

For example, as one embodiment of the outer diameter (D1) of the reinforcement member 8 and the inner diameter (D2) of the metal tube material 6 into which this is inserted, and, further, of the outer diameter of the tip end of the reinforcement member 8 and the inner diameter (D3) of the first wound layer 3, D1 may be so shaped as to be -5/10000 × D2 to +20/10000 × D2, and -5/10000 × D3 to +5/10000 × D3.

According to this embodiment, it is also possible to eliminate, with this reinforcement member 8, occurrences of looseness during heat treatment caused by the difference in linear expansion coefficient between the carbon fiber-reinforced resin member and the metal tube material 6 at the end portion.

Embodiments of the present invention have been described above in detail using drawings. However, specific configurations are by no means limited to such embodiments. Even if design modifications and the like are made within a scope that does not depart from the spirit of the present invention, they are to be included in the present invention.

## Claims

1. A process for producing a tube member made of fiber-reinforced resin, comprising:
a first step of providing a base member comprising an elongate mandrel with a circular cross-section, and an end portion attachment member that is attached to one end of the mandrel and that has a protrusion and a wide diameter portion of a wider diameter as compared to the mandrel;
a second step of forming a first wound layer by hoop winding a fiber impregnated with uncured resin around the outer circumference of the mandrel in the circumferential direction thereof or by helically winding it while turning back the fiber at the protrusion, and subsequently forming an insertion space between the first wound layer and the mandrel by severing an end portion of the first wound layer to sever off the end portion and the end portion attachment member from the mandrel;
a third step of inserting a flanged tube material from one end of the mandrel, and forming a posture where a portion of the tube material is inserted into the insertion space;
a fourth step of forming a second wound layer by hoop winding or helically winding a fiber impregnated with uncured resin around the outer circumference of the first wound layer formed on the outer circumferences of the mandrel and the tube material, thereby producing an intermediate member comprising the tube material and the first and second wound layers; and
a fifth step of producing a tube member made of fiber-reinforced resin in which the first and second wound layers are thermally cured by treating the intermediate member with heat, and subsequently removing the mandrel.

2. A process for producing a tube member made of fiber-reinforced resin, comprising:
a first step of providing a base member comprising an elongate mandrel with a circular cross-section, and an end portion attachment member that is attached to one end of the mandrel and that has a protrusion and a wide diameter portion of a wider diameter as compared to the mandrel;
a second step of forming a first wound layer by hoop winding a fiber impregnated with uncured resin around the outer circumference of the mandrel in the circumferential direction thereof, subsequently forming a second wound layer by helically winding a fiber impregnated with uncured resin around the outer circumference of the first wound layer and the outer circumference of the end portion attachment member while turning back the fiber at the protrusion, and subsequently forming an insertion space between the second wound layer and the mandrel by severing an end portion of the second wound layer to sever off the end portion and the end portion attachment member from the mandrel;
a third step of inserting a flanged tube material from one end of the mandrel, and forming a posture where a portion of the tube material is inserted into the insertion space;
a fourth step of producing, by forming a third wound layer by hoop winding or helically winding a fiber impregnated with uncured resin around the outer circumference of the second wound layer formed on the outer circumferences of the mandrel and the tube material, an intermediate member comprising the tube material, and the first, second, and third wound layers; and
a fifth step of producing a tube member made of fiber-reinforced resin in which the first, second, and third wound layers are thermally cured by treating the intermediate member with heat, and subsequently removing the mandrel.

3. The process for producing the tube member made of fiber-reinforced resin according to claim 1 or 2, wherein
the process further comprises, subsequent to the fifth step, a sixth step of inserting and installing a bearing and a shaft in the interior of the mandrel, subsequently press fitting from one end of the tube material a tubular reinforcement member having an overall length in which a predetermined length is added to the length of the tube material, and producing the tube member made of fiber-reinforced resin with one end of the reinforcement member and one end of the tube material in the same plane.

4. The process for producing the tube member made of fiber-reinforced resin according to claim 1 or 3, wherein, if the first wound layer comprises a wound layer that is helically wound, the winding angle thereof is a small angle of 10 degrees to 20 degrees with respect to the axial direction of the mandrel.

5. The process for producing the tube member made of fiber-reinforced resin according to claim 2 or 3, wherein, if the third wound layer comprises a wound layer that is helically wound, the winding angle thereof is a large angle of 45 degrees or above with respect to the axial direction of the mandrel.

6. The process for producing the tube member made of fiber-reinforced resin according to any one of claims 1 to 5, wherein a recessed groove that extends in the circumferential direction or in a direction that is inclined at a predetermined angle to the circumferential direction is formed on the outer circumference of the tube material.

## Amended claims

### Amended claims under Art. 19.1 PCT

a fourth step of producing, by forming a third wound layer by hoop winding or helically winding a fiber impregnated with uncured resin around the outer circumference of the second wound layer formed on the outer circumferences of the mandrel and the tube material, an intermediate member comprising the tube material, and the first, second, and third wound layers; and
a fifth step of producing a tube member made of fiber-reinforced resin in which the first, second, and third wound layers are thermally cured by treating the intermediate member with heat, and subsequently removing the mandrel.
**3.** (Amended) The process for producing the tube member made of fiber-reinforced resin according to claim 1 or 2, wherein
the process further comprises, subsequent to the fifth step, a sixth step of inserting and installing a bearing and a shaft in the interior of the tube member made of fiber-reinforced resin, subsequently press fitting from one end of the tube material a tubular reinforcement member having an overall length in which a predetermined length is added to the length of the tube material, and producing the tube member made of fiber-reinforced resin with one end of the reinforcement member and one end of the tube material in the same plane.
**4.** The process for producing the tube member made of fiber-reinforced resin according to claim 1 or 3, wherein, if the first wound layer comprises a wound layer that is helically wound, the winding angle thereof is a small angle of 10 degrees to 20 degrees with respect to the axial direction of the mandrel.
**5.** The process for producing the tube member made of fiber-reinforced resin according to claim 2 or 3, wherein, if the third wound layer comprises a wound layer that is helically wound, the winding angle thereof is a large angle of 45 degrees or above with respect to the axial direction of the mandrel.
**6.** The process for producing the tube member made of fiber-reinforced resin according to any one of claims 1 to 5, wherein a recessed groove that extends in the circumferential direction or in a direction that is inclined at a predetermined angle to the circumferential direction is formed on the outer circumference of the tube material.

Statement under Art. 19.1 PCT
Claim 3 is of the same content as the amendment to the corresponding Japanese application, and is one in which "in the interior of the mandrel", which is an obvious typographical error, has been corrected to "in the interior of the tube member made of fiber-reinforced resin".
